# EUROPÄISCHE PATENTSCHRIFT

(11) **EP 2 022 702 B1**
(45) Veröffentlichungstag und Bekanntmachung des Hinweises auf die Patenterteilung: **15.12.2010**
(21) Anmeldenummer: 08014044.5
(22) Anmeldetag: 06.08.2008
(51) Int. Cl.: B62D 15/02, B62D 7/15

(54) **Kraftfahrzeug mit lenkbaren Vorder- und Hinterrädern**
Motor vehicle with steerable front and rear wheels
Véhicule doté de roues avant et arrière orientables

(30) Priorität: 10.08.2007 DE 102007037645
(43) Veröffentlichungstag der Anmeldung: 11.02.2009
(73) Patentinhaber: Audi AG, 85045 Ingolstadt (DE)
(72) Erfinder: Meitinger, Karl-Heinz, 83308 Trostberg (DE)
(74) Vertreter: Thielmann, Frank

(56) Entgegenhaltungen:
- EP-A- 0 835 796
- WO-A-2005/014371
- JP-A- 10 264 839
- US-A1- 2006 235 590
- US-B1- 6 292 094

## Beschreibung

Die Erfindung betrifft ein Kraftfahrzeug umfassend über ein Lenkrad lenkbare Vorderräder sowie über mindestens ein Stellelement automatisch lenkbare Hinterräder sowie eine die Hinterradlenkung steuernde Steuerungseinrichtung.

Bei Kraftfahrzeugen mit lenkbaren Hinterrädern dient deren Lenkbarkeit unter anderem dazu, den Fahrer beim Einparken in eine Parklücke zu unterstützen. US 2006/0235590 A1 beschreibt ein Kraftfahrzeug mit einem Einparksystem, das ein Vorwärtseinparken erleichtert. Im Rahmen eines vollautomatischen Einparkvorgangs, bei dem der Fahrer das Lenkrad nicht bedient, werden Vorderräder und Hinterräder gemäß einer vorher errechneten Einparktrajektorie gesteuert. In einer anderen halbautomatischen Verfahrensausgestaltung kann der Fahrer das Lenkrad noch selbst bedienen, das System mit einer aktiven Vorderradlenkung kann Lenkfehler des Fahrers, die zu einer Abweichung von der Einparktrajektorie führen, bis zu einem gewissen Grad korrigieren. Die Hinterräder werden in einer dort als "bang-bang-stop"-Methode gestellt, d. h., sie werden in jedem Fall immer bis in die maximale Winkelstellung verstellt. Wenn der Fahrer das Lenkrad in die andere Richtung dreht, werden die Hinterräder in die andere Maximalposition verstellt. D. h., die Hinterräder werden immer maximal ausgelenkt. In jedem Fall ist bei dem dort beschriebenen Fahrzeug zwingend ein aktives Vorderrad und- Hinterradlenksystem erforderlich , mit jeweiligen Aktoren.

Aus WO 2004/050458 A1 ist ein Verfahren zur Unterstützung eines Rückwärtseinparkvorgangs bekannt, bei dem eine Einparktrajektorie und ein zugehöriger Lenkwinkel vorausberechnet wird. Die Vorderachslenkung umfasst einen Aktor, d. h., die Vorderräder können automatisch gestellt werden, die Lenkung wird also von einer Elektronik gesteuert. Die Einparktrajektorie ist so berechnet, dass das Fahrzeug mehrere ausgezeichnete Kurvenabschnitte durchfährt, wobei der Streckenverlauf kontinuierlich ist, sich also keine Lenkwinkelsprünge ergeben, was es ermöglicht, das komplette Manöver zu durchfahren, ohne dass das Fahrzeug anhalten muss. Ein solches Verfahren ist günstig für ein Fahrzeug, bei dem die Lenkung automatisch gesteuert werden kann, was den Einsatz eines Lenkaktuators an der Vorderradachse erfordert, der in der Lage ist, den Lenkwinkel des Fahrzeugs aktiv zu stellen, sowohl hinsichtlich des Lenkmoments als auch des Lenkwinkels. Der Fahrer agiert hier also nicht selbst, was von vielen Fahrern jedoch nicht gewünscht wird, vielmehr möchten diese aktiv den Einparkvorgang vornehmen.

JP 10246839 A betrifft ein Kraftfahrzeug gemäß dem Oberbegriff des Anspruchs 1 mit einer automatischen Parkvorrichtung, die zur Positionskorrektur die Hinterräder auslenkt. Dabei wird ausgehend von einer in einen Parkplatz führenden Zielroute eine durch einen Fahrer bedingte Abweichung von der Zielroute über eine Steuerung der Hinterräder ausgeglichen.

US 6,292,094 B1 betrifft ein Kraftfahrzeug mit einem Anhänger. Das Kraftfahrzeug weist steuerbare Vorder- und Hinterräder auf. Um bei Rückwärtsfahrten ein Verklemmen des Anhängers bei einem zu großen Lenkwinkeleinschlag zu verhindern, wird ein Verfahren zur Berechnung des maximalen, unproblematischen Lenkradwinkeleinschlags für die Vorderräder vorgeschlagen.

WO 2005/014371 A1 betrifft ein Verfahren zur Unterstützung des Fahrers bei einem Fahrmanöver entlang einer Referenztrajektorie, wobei eine Lenkwinkelabweichung zwischen dem vom Fahrer tatsächlich eingestellten Ist-Lenkwinkel und dem der angeforderten Lenkradstellung entsprechenden Soll-Lenkwinkel fahrerunabhängig korrigiert wird.

Aus EP 0 835 796 A1 ist ein automatisches Lenksystem für ein Fahrzeug bekannt, bei dem in einem Speichermittel eine Ortskurve des Fahrzeugs zu einer Zielposition gespeichert ist, wobei eine Änderung der gespeicherten Ortskurve möglich ist, wenn sich ein Objekt respektive ein Hindernis in der Ortskurve befindet.

Der Erfindung liegt dabei das Problem zu Grunde, ein Kraftfahrzeug anzugeben, das den Fahrer bei einer Rückwärtsfahrt zum Einparken unterstützt.

Zur Lösung dieses Problems ist ein Kraftfahrzeug umfassend lenkbare Vorderräder wie auch über ein Stellelement automatisch lenkbare Hinterräder vorgesehen, das sich dadurch auszeichnet, dass für einen Rückwärtseinparkvorgang mit einem vom Fahrer betätigten Lenkrad eine Abweichung des Ist-Lenkwinkels der Vorderräder von einem bezogen auf eine ermittelte Soll-Einparktrajektorie bestimmten Soll-Lenkwinkel der Vorderräder ermittelbar und die Hinterräder in Abhängigkeit der ermittelten Abweichung zur zumindest teilweisen Korrektur der Abweichung auslenkbar sind.

Beim erfindungsgemäßen Kraftfahrzeug lenkt der Fahrer während des Rückwärtseinparkvorgangs nach wie vor selbst, er übernimmt also aktiv die Wegsteuerung. Über das Lenkrad stellt er an den Vorderrädern einen Ist-Lenkwinkel ein. Seitens einer Steuerungseinrichtung wurde zuvor eine Einparktrajektorie berechnet, also eine Wegstrecke, längs welcher ein Bezugspunkt des Fahrzeugs, beispielsweise die Mitte der Hinterachse, geführt werden soll, in Verbindung mit einem definierten Verlauf des Kurswinkels des Fahrzeugs, um optimal in die Parklücke einzufahren. Die Berechnung der Einparktrajektorie erfolgt unter Verwendung eines geeigneten Fahrzeugmodells, wobei zuvor Daten ermittelt wurden, die die Parklücke näher beschreiben, d. h., diese wurde zuvor über eine geeignete fahrzeugseitige Sensorik in ihrer Größe und Position ausgemessen, beispielsweise, indem das Fahrzeug an der Parklücke vorbeifährt. Anhand der Soll-Einparktrajektorie wird ein Soll-Lenkwinkel bestimmt, den die Vorderräder an jeden Punkt der Trajektorie einnehmen müssen, damit das Fahrzeug optimal einfährt. Die Soll-Trajektorie wird bevorzugt ohne Berücksichtigung der Lenkbarkeit der Hinterräder berechnet, also ohne das über diese stellbare hintere Lenkwinkelintervall, mithin also unter Annahme starrer Hinterräder.

Wenn der Fahrer im Idealfall - der üblicherweise nicht eintritt - den Ist-Lenkwinkel stets entsprechend dem Soll-Lenkwinkel verändert, mithin also exakt der Einparktrajektorie folgend fährt, ist eine Korrektur über die Hinterradlenkung nicht erforderlich. Ergibt jedoch der kontinuierliche Vergleich zwischen Ist-Lenkwinkel und Soll-Lenkwinkel, dass eine Abweichung gegeben ist, so wird über die Steuerungseinrichtung ein Soll-Lenkwinkel für die Hinterräder ermittelt, der geeignet ist, die vom Fahrer generierte Lenkwinkelabweichung an den Vorderrädern zumindest teilweise zu korrigieren. Ist beispielsweise der Ist-Lenkwinkel etwas kleiner als der Soll-Lenkwinkel, so ist der fahrbare Kurvenradius zu groß. Dem kann dadurch begegnet werden, dass ein korrigierender Soll-Hinterradlenkwinkel ermittelt wird, der die Hinterräder leicht gegensinnig zu den Vorderrädern auslenkt, was dazu führt, dass der Radstand des Fahrzeugs virtuell etwas kürzer und der Kurvenradius verkleinert wird. Im umgekehrten Fall, wenn der Ist-Lenkwinkel etwas größer als der Soll-Lenkwinkel ist, mithin also der Fahrer zu stark einschlägt und der Kurvenradius zu klein wird, kann als Soll-Hinterradlenkwinkel ein solcher ermittelt werden, über den die Hinterräder etwas gleichsinnig zu den Vorderrädern gestellt werden, so dass die Lenkwinkelüberhöhung hierüber wiederum teilweise kompensiert werden kann.

Erfindungsgemäß kommt hier also eine echte Regelung zum Einsatz, wobei eine geeignete Steuerungseinrichtung stets über den Soll-Lenkwinkel und den Ist-Lenkwinkel der Vorderräder als Eingangsgrößen einen Soll-Lenkwinkel für die Hinterräder ermittelt.

Eine Einparktrajektorie wird wie beschrieben bezüglich eines fahrzeugseitigen Bezugspunkts, beispielsweise der Mitte der Hinterachse derart ermittelt, dass der Bezugspunkt bei sich änderndem Lenkwinkel der Vorderräder immer entlang der Trajektorie bewegt wird. Das Fahrzeug nimmt in einem solchen Fall, wenn es idealerweise entlang der Trajektorie bewegt wird, stets einen bestimmten Kurswinkel relativ zur Parklücke bzw. zur beabsichtigten idealen Fahrzeugendposition ein. Unter dem Kurswinkel versteht man den Winkel der Fahrzeuglängsachse relativ zur Längsrichtung der Parklücke bzw. zur Lage der Längsachse des ideal positionierten, eingeparkten Fahrzeugs. Nachdem die Einparktrajektorie in der Regel eine S-Form aufweist, ändert sich zwangsläufig entlang dieser auch der Kurswinkel.

Nun ist es über eine erfindungsgemäße Hinterradkorrektur entweder möglich, die Korrektur so vorzunehmen, dass der Bezugspunkt nach wie vor auf der ermittelten idealen Trajektorie bleibt, sich jedoch der Kurswinkel etwas ändert, oder derart, dass über die Korrektur der Kurswinkel wie ursprünglich berechnet verbleibt, sich jedoch der Bezugspunkt von der ursprünglichen Soll-Trajektorie entfernt. Je nachdem, welchen Ansatz man wählt, können deshalb erfindungsgemäß die Hinterräder derart in Abhängigkeit der Abweichung verstellbar sein, dass entweder ein fahrzeugseitiger Bezugspunkt, also beispielsweise die Mitte der Hinterachse, zu dem die Soll-Einparktrajektorie ermittelt ist, auf der Soll-Einparktrajektorie verbleibt, während der Ist-Kurswinkel des Fahrzeugs von einem ursprünglich ermittelten Soll-Kurswinkel abweicht, oder dass der Ist-Kurswinkel weiterhin dem Soll-Kurswinkel entspricht, während der Bezugspunkt die ursprüngliche Soll-Einparktrajektorie verlässt und einer neu ermittelten Soll-Einparktrajektorie folgt. Im letzteren Fall wird also unmittelbar aus dem Abweichungsverhalten resultierend eine neue Soll-Einparktrajektorie ermittelt, der dann der Bezugspunkt folgt, und der wiederum entsprechende trajektoriebezogene Soll-Lenkwinkel zugeordnet sind. Es erfolgt also in jedem Fall dann, wenn eine Korrektur über die Hinterräder erfolgt, unmittelbar eine systemseitige Anpassung, indem zwangsläufig in Folge des Eingreifens der Hinterradlenkung die Soll-Winkel eine gewisse Änderung erfahren.

Alternativ zu der Möglichkeit, entweder den Bezugspunkt oder den Kurswinkelverlauf konstant wie ursprünglich ermittelt zu halten, und nur einen der beiden Parametern nachzuführen, ist es auch denkbar, die Hinterräder derart in Abhängigkeit der Abweichung zu verstellen, dass ein fahrzeugseitiger Bezugspunkt der Soll-Einparktrajektorie näherungsweise folgt und der Ist-Kurswinkel des Fahrzeugs näherungsweise einem ursprünglich ermittelten Soll-Kurswinkel folgt. Bei dieser Erfindungsalternative wird also eine gewisse Abweichung sowohl des Bezugspunkts als auch des Kurswinkels von der jeweiligen Trajektorie bzw. vom vorab ermittelten Soll-Kurswinkelverlauf in Kauf genommen, die Regelung erfolgt über das System jedoch so, dass die Abweichungen jeweils möglichst gering sind.

Wie bereits beschrieben wird die Soll-Einparktrajektorie, sei es die ursprünglich ermittelte oder eine nachfolgend in Folge einer vorgenommenen Korrektur neu ermittelte Einparktrajektorie, ohne Berücksichtigung der grundsätzlich gegebenen Hinterradverstellung, mithin also des maximal hierüber erfassbaren Verstellungswinkelbereichs, ermittelt. Anderenfalls würde die Einparktrajektorie so ermittelt werden, dass über die Hinterräder quasi kein Korrekturspielraum mehr verbleibt, nachdem deren Wirkung im Falle einer Verstellung bereits in die Trajektorieermittlung eingeflossen ist. Denkbar ist allenfalls, die jeweilige Soll-Einparktrajektorie unter Berücksichtigung nur eines Teilwinkelbereichs der maximalen Hinterradverstellung zu ermitteln. Sind beispielsweise die Hinterräder ausgehend von ihrer Null-Stellung um ± 10° verstellbar, so wäre es denkbar, einen Winkelintervall von z. B. ± 3° im Rahmen der Ermittlung der Soll-Trajektorie zu ermitteln, so dass das verbleibende Restwinkelintervall von ± 10° - ± 3° noch zur Abweichungskompensation etwaiger Lenkwinkelfehler des Fahrers zur Verfügung steht.

Zweckmäßigerweise ist im Kraftfahrzeug eine Anzeigevorrichtung vorgesehen, an der dem Fahrer der Soll-Lenkwinkel darstellbar ist. Dies kann beispielsweise in Form eines Balkendiagramms oder eines Kuchendiagramms oder dergleichen erfolgen, innerhalb welchem dem Fahrer auf einfache Weise und intuitiv sein momentaner Ist-Lenkwinkel und der zu erreichende Soll-Lenkwinkel ersichtlich ist, so dass er den Ist-Lenkwinkel anpassen kann.

Zweckmäßig ist es ferner, wenn anhand der ermittelten Abweichung des Bezugspunkts von der Soll-Einparktrajektorie und/oder der Abweichung des Ist-Kurswinkels von dem Soll-Kurswinkel ein Korrektur-Soll-Lenkwinkel ermittelbar und dieser oder der um den Korrektur-Soll-Lenkwinkel korrigierte Soll-Lenkwinkel an der Anzeigevorrichtung darstellbar ist. Wie beschrieben wird über die Hinterradlenkung eine Korrektur eines Lenkwinkelfehlers vorgenommen. Diese Korrektur kann wie beschrieben letztlich nur in eine Richtung erfolgen, nämlich indem im Wesentlichen der Bezugspunkt nach wie vor auf der Trajektorie verbleibt, oder der Kurswinkel unverändert bleibt. In jedem Fall resultiert aus dem Eingriff der Hinterradlenkung, dass es zu einer Änderung des Soll-Lenkwinkels kommt, um unter Beibehaltung des Bezugspunkts auf der Soll-Trajektorie oder des Kurswinkels das Fahrzeug entsprechend zu führen. Die Erfindung sieht nun vor, mit der Erfassung der jeweiligen Abweichung über ein Fahrzeugmodell auch die Abweichung des Parameters, der nicht unmittelbar korrigiert wird, von dessen Sollwert zu berechnen, also beispielsweise die Differenz von Soll- und Ist-Kurswinkel, wenn die Regelung der Hinterachslenkung derart erfolgt, dass das Fahrzeug auf der Soll-Trajektorie bleibt. Aus der Abweichung wird sodann ein Korrektur-Soll-Lenkwinkel errechnet, der zum ursprünglich ermittelten Soll-Lenkwinkel hinzuzuaddieren ist. Erfindungsgemäß wird nun dieser Korrektur-Soll-Lenkwinkel entweder selbst an der Anzeigevorrichtung angezeigt, oder bereits der um ihn korrigierte Soll-Lenkwinkel. Dem Fahrer wird also unmittelbar mit Erfassen einer Abweichung und eines Korrektureingriffs über die Hinterradlenkung auch dargestellt, wie er selbst nachfolgend weiterlenken soll. Da die jeweiligen Rechenvorgänge in Echtzeit erfolgen, kann folglich sofort auf eine etwaige Abweichung hinsichtlich der aktiven Mitlenkung reagiert als auch die entsprechenden sich ändernden Parameter bestimmt und dem Fahrer zur optimierten Fortsetzung des Rückwärtseinparkvorgangs dargestellt werden.

Weiterhin kann es von Vorteil sein, wenn dem Fahrer über eine Anzeigevorrichtung die vorzugsweise laufend aktualisierte Abweichung des Ist-Lenkwinkels vom Soll-Lenkwinkel darstellbar ist. Der Fahrer erhält dann kontinuierlich eine Information, wie sein momentaner Lenkwinkel ist und wie er idealerweise sein sollte, was von Vorteil ist, als der Fahrer daraus sofort erkennen kann, in welcher Richtung er den Ist-Lenkwinkel zu verändern hat, um sich dem Soll-Lenkwinkel zu nähern.

Weiterhin ist es von Vorteil, wenn dem Fahrer über eine Anzeigevorrichtung die vorzugsweise laufend aktualisierte momentan korrigierbare maximale Abweichung des Ist-Lenkwinkels vom Soll-Lenkwinkel darstellbar ist. Hierüber erhält der Fahrer unmittelbar und zeitecht die Information, wie groß der Korrekturspielraum ist, den das System in Folge der bereits gegebenen Abweichungen von den idealen Soll-Vorgaben noch hat. Dies kann beispielsweise dergestalt erfolgen, dass in einem Balkendiagramm dem Fahrer zwei Balken gezeigt werden, die zwischen sich das maximale Lenkwinkelintervall zeigen, innerhalb dem grundsätzlich im Moment eine Korrektur möglich ist, über einen dritten Balken wird der Ist-Lenkwinkel dargestellt. Der Fahrer kann dann intuitiv anhand der Position des Ist-Lenkwinkel-Balkens relativ zu den begrenzenden beiden anderen Balken erkennen, wie groß der Korrekturspielraum in der jeweiligen Richtung noch ist.

Dem Fahrer wird zweckmäßigerweise eine Warninformation ausgegeben, wenn eine Abweichung des Ist-Lenkwinkels vom Soll-Lenkwinkel nicht mehr korrigierbar ist, wenn also das System festgestellt hat, dass er es nicht mehr schafft, in optimaler Weise in die Parklücke einzufahren bzw. die beabsichtigte ideale Fahrzeugendstellung näherungsweise zu erreichen. Diese Warninformation kann optischer, akustischer oder haptischer Natur sein.

Die Hinterräder selbst sind, um möglichst aggilitätssteigernd eingreifen zu können, und um ein möglichst großes Korrekturwinkelpotential zu haben, um einen Winkel von bis zu ± 10 Grad um die Nullstellung der Hinterräder verstellbar. Dies bietet die Möglichkeit, auch vom Fahrer verursachte größere Lenkwinkelfehler zu korrigieren.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung eines erfindungsgemäßen Kraftfahr- zeugs,
- Fig. 2: eine Prinzipdarstellung eines Einparkvorgangs mit gezeigter Soll-Einparktrajektorie,
- Fig. 3: eine Prinzipdarstellung des Regelungsablaufs der Lenkwinkel- korrektur, und
- Fig. 4: eine Prinzipdarstellung einer Informationsanzeige an einer An- zeigevorrichtung.

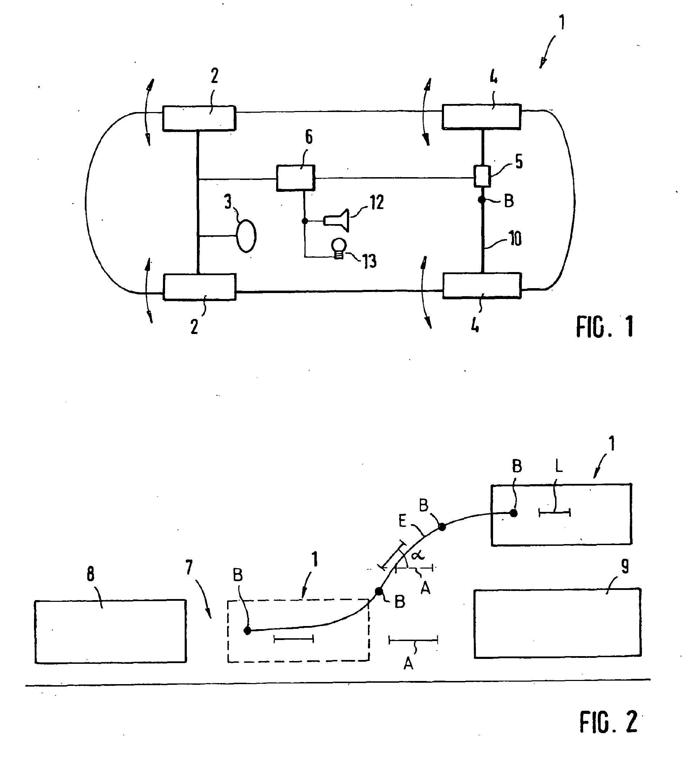

Fig. 1 zeigt ein erfindungsgemäßes Kraftfahrzeug 1 umfassend Vorderräder 2, die in bekannter Weise über ein Lenkrad 3 gelenkt werden können, wie durch die Doppelpfeile dargestellt ist. Die gezeigten Hinterräder 4 sind ebenfalls lenkbar, wie durch die Doppelpfeile gezeigt ist, wozu mindestens ein Aktor 5 vorgesehen ist, der dies automatisch in Abhängigkeit der Steuerbefehle, die von einer zugehörigen Steuerungseinrichtung 6 gegeben werden, vornimmt.

Fig. 2 zeigt eine Prinzipdarstellung einer typischen Einparksituation. Das erfindungsgemäße Kraftfahrzeug 1 möchte in eine Parklücke 7, die von zwei anderen Fahrzeugen 8, 9 begrenzt wird, einparken. Hierzu ist die Ermittlung einer Soll-Einparktrajektorie E erforderlich, die beispielsweise über die Steuerungseinrichtung 6 unter Verwendung eines geeigneten Fahrzeugmodells sowie geeigneter Informationen über die Parklücke 7, die zuvor über eine hier nicht näher gezeigte fahrzeugseitige Erfassungssensorik ausgemessen wurde, ermittelt wird. Die Einparktrajektorie E stellt den idealen Wegverlauf dar, längs welche sich ein Bezugspunkt B des Kraftfahrzeugs 1, beispielsweise die Mitte der Hinterachse 10 des Kraftfahrzeugs, bewegt. Zur Ermittlung der Einparktrajektorie E wird bevorzugt lediglich das Lenkwinkelpotential der Vorderräder 2 berücksichtigt, nicht aber die Winkelverstellung der Hinterräder 4. Wie in Fig. 2 gezeigt ist, wandert bei einer Rückwärtsfahrt idealerweise der Bezugspunkt B entlang der Einparktrajektorie, bis das Fahrzeug 1 seine gestrichelt gezeigte ideale Endposition erreicht hat.

Des Weiteren wird ein Soll-Kurswinkel zu jedem Punkt entlang der Einparktrajektorie E ermittelt. Der Kurswinkel ergibt sich aus der Lage der Längsachse L des Fahrzeugs 1 relativ zu einer ausgezeichneten Achse der Parklücke 7, die in Fig. 2 als Horizontale A dargestellt ist. Exemplarisch ist der Kurswinkel α in Fig. 2 für eine Position eingezeichnet.

Beim erfindungsgemäßen Kraftfahrzeug lenkt der Fahrer während des Einparkvorgangs selbst. Um das Fahrzeug exakt entlang der Soll-Trajektorie E zu führen, so dass der Bezugspunkt B in idealer Weise zu jedem Zeitpunkt auf der Trajektorie E ist, ist deshalb jedem Punkt entlang der Trajektorie E ein bestimmter Soll-Lenkwinkel zugeordnet. Sofern der Fahrer in der Lage ist, den Ist-Lenkwinkel der Vorderräder 2 stets dem Soll-Lenkwinkel der Vorderräder 2 einzustellen, würde er exakt entlang der Trajektorie E in die Parklücke 7 einfahren. Üblicherweise jedoch weicht der Ist-Lenkwinkel vom Soll-Lenkwinkel der Vorderräder etwas ab.

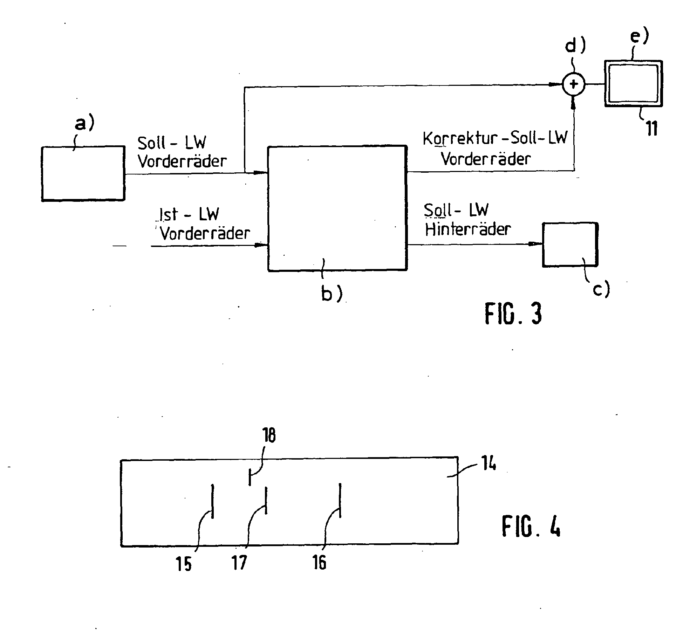

Hier greift nun der erfindungsgemäße Steuer- oder Regelkreis des Kraftfahrzeugs 1 bzw. das erfindungsgemäße Steuerverfahren für die Hinterräder zur Lenkfehlerkorrektur, wie in Fig. 3 dargestellt ist.

In einem ersten Schritt a) erfolgt die Berechnung einer Soll-Einparktrajektorie in Abhängigkeit der bereits beschriebenen Randbedingungen anhand eines Fahrzeugmodells. Hieraus ergibt sich ein bestimmter Soll-Lenkwinkel, der zur jeweiligen Fahrzeug-Ist-Position, die beispielsweise über ein Positionserfassungssystem kontinuierlich bestimmt wird, ermittelt wird. In Fig. 3 ist dieser Soll-Lenkwinkel bezüglich der Vorderräder mit "Soll-LW Vorderräder" angegeben. Dieser Soll-Lenkwinkel der Vorderräder wird in einem Schritt b) mit dem Ist-Lenkwinkel der Vorderräder, angegeben mit "Ist-LW Vorderräder" verglichen, was wie auch die Trajektorienberechnung im Schritt a) beispielsweise durch die Steuerungseinrichtung 6 erfolgt. Im Schritt b) erfolgt eine Bestimmung der Abweichung des Ist-Lenkwinkels vom Soll-Lenkwinkel der Vorderräder. Eine Abhängigkeit der erfassten Abweichung wird im Schritt b) ein Soll-Lenkwinkel ermittelt, der an den Hinterrädern eingestellt werden soll, um die gegebene Abweichung des Vorderradlenkwinkels, die natürlich zu einer entsprechenden Abweichung der Fahrstrecke von der ermittelten Trajektorie führt, zumindest teilweise zu kompensieren. Der Soll-Lenkwinkel der Hinterachse ist in Fig. 3 mit "Soll-LW Hinterräder" angegeben. Der entsprechende Soll-Lenkwinkel-Steuerwert wird im Schritt c) an einen oder mehrere Steueraktoren 5 der Hinterachse gegeben. Dort erfolgt die entsprechende steuerparameterabhängige Verstellung der Hinterräder.

Gleichzeitig wird im Schritt b) ein Korrektur-Soll-Lenkwinkel bezüglich der Vorderräder ermittelt, in Fig. 3 angegeben mit "Korrektur-Soll-LW Vorderräder". Dies ist der positive oder negative Winkelwert, der zum Soll-Lenkwinkelwert der Vorderräder, wie er sich unmittelbar aus der Trajektorie ergibt, zu addieren ist. Denn in Folge der Verstellung der Hinterräder ergibt sich zwangsläufig, dass sich der Soll-Lenkwinkel, wie er nachfolgend einzustellen ist, ändert. Denn die Einlenkung der Hinterräder verursacht je nach Steuer- oder Regelungsprozedere eine Abweichung des Bezugspunkts B von der Soll-Trajektorie E oder eine Abweichung oder Änderung des Kurswinkels α. Die Randbedingungen ändern sich folglich, weshalb der Fahrer für ein korrektes Einparken unter geänderten Bedingungen einen anderen Soll-Lenkwinkel idealerweise einstellen muss. Im Schritt d) wird der Korrektur-Soll-Lenkwinkel zum Soll-Lenkwinkel addiert und anschließend an einer Anzeigevorrichtung 11 gemäß Schritt e) ausgegeben. Der tatsächliche, in Abhängigkeit der vorgenommenen Hinterradkorrektur ermittelte neue Soll-Lenkwinkel wird also dem Fahrer kontinuierlich mitgeteilt, so dass dieser seinen Ist-Lenkwinkel hiernach ändern kann, um möglichst ideal den optimierten neuen ermittelten Einparkvorgaben zu entsprechen.

Die Ermittlung des Korrektur-Soll-Lenkwinkels hängt davon ab, welcher zentrale Führungsparameter trotz Eingriffs der Hinterradlenkung beibehalten werden soll, ob also entweder der Bezugspunkt B nach wie vor auf der ursprünglich ermittelten Soll-Trajektorie E geführt werden soll unter Inkaufnahme einer Änderung des jeweiligen Kurswinkels α, oder ob der Kurswinkel α dem ursprünglichen Soll-Kurswinkelverlauf folgend beibehalten werden soll, unter Inkaufnahme einer Abweichung des Bezugspunkts B von der ursprünglichen Soll-Trajektorie E respektive Ermittlung einer neuen Soll-Trajektorie E für den Bezugspunkt. Im Schritt b) wird der Korrektur-Soll-Lenkwinkel über das Fahrzeugmodell die Abweichung des Parameters, also des Bezugspunkts B oder des Kurswinkels α, der nicht unmittelbar korrigiert wird, dessen Abweichung also in Kauf genommen wird, vom jeweiligen Sollwert berechnet, also beispielsweise die Differenz des Ist-Kurswinkels vom Soll-Kurswinkel, wenn die Regelung der Hinterradlenkung so erfolgt, dass das Fahrzeug bzw. der Bezugspunkt B auf der Soll-Trajektorie E bleibt, respektive die Abweichung des Bezugspunkts B bzw. dessen Ist-Wert von einem Soll-Wert auf der ursprünglichen Trajektorie E, wenn die Regelung der Hinterachslenkung so erfolgt, dass der Kurswinkel entsprechend den ursprünglich ermittelten Soll-Kurswinkelverlauf konstant bleibt.

Die beschriebene Regelung erfolgt kontinuierlich während der gesamten Fahrzeugbewegung, d. h., das System ermittelt kontinuierlich etwaige Abweichungen sowie die zugehörigen Soll-Lenkwinkel für die Hinterräder und etwaige Korrektur-Soll-Winkel für die Vorderräder. Das System aktualisiert sich kontinuierlich, um zu jedem Zeitpunkt die idealen Soll- und Korrekturvorgaben zu ermitteln.

Sofern das System nicht in der Lage ist, in Folge einer zu großen Abweichung eine hinreichende Korrektur vorzunehmen, um näherungsweise in die ideale Parkendposition zu gelangen, so gibt das System eine Warninformation aus, die entweder akustisch wie durch das Lautsprechersymbol 12 in Fig. 1 oder optisch durch das Lampensymbol 13 in Fig. 1 gezeigt erfolgen kann, letzteres beispielsweise auch an der Anzeigevorrichtung 11, beispielsweise dem üblicherweise bei Kraftfahrzeugen vorgesehenen konsolenmittigen Display.

An diesem erfolgt auch eine Darstellung der Lenkwinkelverhältnisse, um dem Fahrer eine Orientierung zu geben. Ein Prinzipbeispiel ist in Fig. 4 gezeigt. In einem Balkendiagramm 14 sind zwei Rand- oder Begrenzungsbalken 15, 16 gezeigt, die das Winkelintervall einer maximal möglichen Abweichung vom Soll-Lenkwinkel, der mit dem Balken 17 dargestellt ist, zeigen. Gezeigt ist ferner ein Balken 18, der den Ist-Lenkwinkel darstellt. Sämtliche Balken sind horizontal beweglich, d. h., das Intervall zwischen den Balken 15 und 16, das natürlich mit abnehmendem Korrekturspielraum, wenn die Abweichung Soll-Ist-Lenkwinkel zu groß wird, immer schmäler wird, ist für jeden Punkt bzw. Zeitpunkt variabel, wie sich natürlich auch die Lage des Soll-Lenkwinkelbalken 17 kontinuierlich ändert, wenn dieser korrigiert wird, und wie sich auch die Lage des Ist-Lenkwinkelbalkens 18 zwangsläufig in Folge der Lenkbetätigung des Fahrers ebenfalls ändert. Der Ist-Lenkwinkelbalken 18 bewegt sich ebenfalls horizontal, je nachdem, wie der Fahrer das Lenkrad bewegt. Idealerweise befindet er sich, wenn der Fahrer es schafft, dass der Ist-Lenkwinkel dem Soll-Lenkwinkel entspricht, unmittelbar oberhalb des Soll-Lenkwinkelbalkens 17. Aus dem gegebenen Balkenversatz erkennt der Fahrer aber auch, dass eben eine Abweichung zwischen Soll- und Ist-Lenkwinkel gegeben ist. Auch erkennt er ohne weiteres, in welche Richtung er das Lenkrad drehen müsste, um die Abweichung zu kompensieren, im vorgelegenen Fall beispielsweise nach rechts, um den Ist-Lenkwinkelbalken 18 nach rechts zu bewegen. Auf diese Weise erhält der Fahrer auf sehr einfache, intuitive Weise Kenntnis über die gegebenen Lenkwinkelsituation sowie über die den Korrekturspielraum. Je näher der Soll-Lenkwinkelbalken 17, der in Folge der Addition eines möglichen Korrektur-Soll-Lenkwinkelwertes ebenfalls kontinuierlich geändert werden kann, an einem der Balken 15 oder 16 positioniert ist, um so weniger Korrekturspielraum zur jeweiligen Seite hinsichtlich einer möglicherweise zunehmenden Abweichung ist gegeben, was für den Fahrer ebenfalls intuitiv erfassbar ist.

Der jeweilige Lenkwinkel, der sämtlichen Berechnungen und Darstellungen zu Grunde gelegt wird, kann entweder der tatsächliche Lenkwinkel der Vorderräder sein, also der Winkel, um den sie tatsächlich eingeschlagen sind. Denkbar ist es aber auch, hierfür den Lenkraddrehwinkel als Maß zu nehmen, also den Winkel, um den der Fahrer das Lenkrad verdreht. Dies ist insbesondere dahingehend von Vorteil, als der Fahrer das Lenkrad selbst in der Hand hat und bewegt und in Folge dessen einen unmittelbareren Bezug insbesondere zu der intuitiven Darstellung des Ist-Lenkwinkels, des Soll-Lenkwinkels und der maximalen begrenzenden Korrekturlenkwinkel gemäß der Balken 15 - 18 hat.

## Patentansprüche

1. Kraftfahrzeug umfassend über ein Lenkrad lenkbare Vorderräder sowie über mindestens ein Stellelement automatisch lenkbare Hinterräder sowie eine die Hinterradlenkung steuernde Steuerungseinrichtung,
**dadurch gekennzeichnet,**
**dass** für einen Rückwärtseinparkvorgang mit einem vom Fahrer betätigten Lenkrad eine Abweichung des Ist-Lenkwinkels der Vorderräder (2) von einem bezogen auf eine ermittelte Soll-Einparktrajektorie (E) bestimmten Soll-Lenkwinkel der Vorderräder (2) ermittelbar und die Hinterräder (4) in Abhängigkeit der ermittelten Abweichung zur zumindest teilweisen Korrektur der Abweichung auslenkbar sind.

2. Kraftfahrzeug nach Anspruch 1,
**dadurch gekennzeichnet,**
**dass** die Hinterräder (4) derart in Abhängigkeit der Abweichung verstellbar sind, dass ein fahrzeugseitiger Bezugspunkt (B), zu dem die Soll-Einparktrajektorie (E) ermittelt ist, auf der Soll-Einparktrajektorie (E) verbleibt, während der Ist-Kurswinkel (α) des Fahrzeugs (1) von einem ursprünglich ermittelten Soll-Kurswinkel abweicht, oder dass der Ist-Kurswinkel (α) weiterhin dem Soll-Kurswinkel entspricht, während der Bezugspunkt (B) die ursprüngliche Soll-Einparktrajektorie (E) verlässt und einer neu ermittelten Soll-Einparktrajektorie (E) folgt.

3. Kraftfahrzeug nach Anspruch 1,
**dadurch gekennzeichnet,**
**dass** die Hinterräder (4) derart in Abhängigkeit der Abweichung verstellbar sind, dass ein fahrzeugseitiger Bezugspunkt (B) der Soll-Einparktrajektorie (E) näherungsweise folgt und der Ist-Kurswinkel (α) des Fahrzeugs (1) näherungsweise einem ursprünglich ermittelten Soll-Kurswinkel folgt.

4. Kraftfahrzeug nach einem der vorangehenden Ansprüche,
**dadurch gekennzeichnet,**
**dass** die Soll-Einparktrajektorie (E) ohne Berücksichtigung der maximalen Hinterradverstellung oder unter Berücksichtigung nur eines Teilwinkelbereichs der maximalen Hinterradverstellung ermittelbar ist.

5. Kraftfahrzeug nach einem der vorangehenden Ansprüche,
**dadurch gekennzeichnet,**
**dass** eine Anzeigevorrichtung (11) vorgesehen ist, an der dem Fahrer der Soll-Lenkwinkel darstellbar ist.

6. Kraftfahrzeug nach Anspruch 5 und einem der Ansprüche 2 oder 3,
**dadurch gekennzeichnet,**
**dass** anhand der ermittelbaren Abweichung des Bezugspunkts (B) von der Soll-Einparktrajektorie (E) und/oder der Abweichung des Ist-Kurswinkels (α) von dem Soll-Kurswinkel ein Korrektur-Soll-Lenkwinkel ermittelbar und dieser oder der um den Korrektur-Soll-Lenkwinkel korrigierte Soll-Lenkwinkel an der Anzeigevorrichtung (11) darstellbar ist.

7. Kraftfahrzeug nach einem der vorangehenden Ansprüche,
**dadurch gekennzeichnet,**
**dass** dem Fahrer über eine Anzeigevorrichtung (11) die vorzugsweise laufend aktualisierte Abweichung des Ist-Lenkwinkels vom Soll-Lenkwinkel darstellbar ist.

8. Kraftfahrzeug nach einem der vorangehenden Ansprüche,
**dadurch gekennzeichnet,**
**dass** dem Fahrer über eine Anzeigevorrichtung (11) die vorzugsweise laufend aktualisierte momentan korrigierbare maximale Abweichung des Ist-Lenkwinkels vom Soll-Lenkwinkel darstellbar ist.

9. Kraftfahrzeug nach einem der vorangehenden Ansprüche,
**dadurch gekennzeichnet,**
**dass** dem Fahrer eine Warninformation ausgebar ist, wenn eine Abweichung des Ist-Lenkwinkels vom Soll-Lenkwinkel nicht mehr korrigierbar ist.

10. Kraftfahrzeug nach einem der vorangehenden Ansprüche,
**dadurch gekennzeichnet,**
**dass** die Hinterräder (4) um einen Winkel von bis zu ± 10° um die Nullstellung der Hinterräder verstellbar sind.

## Claims

1. Motor vehicle comprising front wheels which can be steered by means of a steering wheel and rear wheels which can be steered automatically by means of at least one actuating element, as well as a control device which controls the rear wheel steering,
**characterized**
**in that** a deviation of the actual steering angle of the front wheels (2) from a setpoint steering angle of the front wheels (2) which is determined with respect to a detected setpoint parking trajectory (E) can be detected for a reverse parking process with a steering wheel which is activated by the driver, and the rear wheels (4) can be deflected as a function of the detected deviation with respect to the at least partial correction of the deviation.

2. Motor vehicle according to Claim 1,
**characterized**
**in that** the rear wheels (4) can be adjusted as a function of the deviation in such a way that a vehicle-side reference point (B), with respect to which the setpoint parking trajectory (E) is detected, remains on the setpoint parking trajectory (E), while the actual course angle (α) of the vehicle (1) deviates from an originally detected setpoint course angle, or in that the actual course angle (α) also corresponds to the setpoint course angle, while the reference point (B) leaves the original setpoint parking trajectory (E) and follows a newly detected setpoint parking trajectory (E).

3. Motor vehicle according to Claim 1,
**characterized**
**in that** the rear wheels (4) can be adjusted as a function of the deviation in such a way that a vehicle-side reference point (B) approximately follows the setpoint parking trajectory (E), and the actual course angle (α) of the vehicle (1) approximately follows an originally detected setpoint course angle.

4. Motor vehicle according to one of the preceding claims,
**characterized**
**in that** the setpoint parking trajectory (E) can be detected without taking into account the maximum rear wheel adjustment or by taking into account just a partial angular range of the maximum rear wheel adjustment.

5. Motor vehicle according to one of the preceding claims,
**characterized**
**in that** a display device (11) on which the setpoint steering angle can be displayed to the driver is provided.

6. Motor vehicle according to Claim 5 and one of Claims 2 and 3,
**characterized**
**in that** a correction setpoint steering angle can be detected on the basis of the detectable deviation of the reference point (B) from the setpoint parking trajectory (E) and/or the deviation of the actual course angle (α) from the setpoint course angle, and said correction setpoint steering angle or the setpoint steering angle which has been corrected by the correction setpoint steering angle can be displayed on the display device (11).

7. Motor vehicle according to one of the preceding claims,
**characterized**
**in that** the preferably continuously updated deviation of the actual steering angle from the setpoint steering angle can be displayed to the driver by means of a display device (11).

8. Motor vehicle according to one of the preceding claims,
**characterized**
**in that** the preferably continuously updated, instantaneously correctable maximum deviation of the actual steering angle from the setpoint steering angle can be displayed to the driver by means of a display device (11).

9. Motor vehicle according to one of the preceding claims,
**characterized**
**in that** warning information can be output to the driver if a deviation of the actual steering angle from the setpoint steering angle can no longer be corrected.

10. Motor vehicle according to one of the preceding claims,
**characterized**
**in that** the rear wheels (4) can be adjusted by an angle of up to ± 10° about the zero position of the rear wheels.

## Revendications

1. Véhicule automobile comprenant des roues avant dirigeables par le biais d'un volant de direction ainsi que des roues arrières pouvant être dirigées automatiquement par le biais d'au moins un élément de réglage, ainsi qu'un dispositif de commande commandant la direction des roues arrières,
**caractérisé en ce que**
pour une opération de stationnement vers l'arrière avec un volant de direction actionné par le conducteur, on peut déterminer un écart entre l'angle de direction réel des roues avant (2) et un angle de direction de consigne des roues avant (2) déterminé par rapport à une trajectoire de stationnement de consigne déterminée (E) et les roues arrières (4) peuvent être déviées en fonction de l'écart déterminé pour corriger au moins en partie cet écart.

2. Véhicule automobile selon la revendication 1,
**caractérisé en ce que**
les roues arrières (4) peuvent être déplacées en fonction de l'écart de telle sorte qu'un point de référence (B) du côté du véhicule, au niveau duquel la trajectoire de stationnement de consigne (E) est déterminée, reste sur la trajectoire de stationnement de consigne (E) tandis que l'angle de course réel (α) du véhicule (1) s'écarte d'un angle de course de consigne déterminé initialement, ou **en ce que** l'angle de course réel (α) correspond en outre à l'angle de course de consigne tandis que le point de référence (B) quitte la trajectoire de stationnement de consigne initiale (E) et suit une trajectoire de stationnement de consigne nouvellement déterminée (E).

3. Véhicule automobile selon la revendication 1,
**caractérisé en ce que**
les roues arrières (4) peuvent être déplacées en fonction de l'écart de telle sorte qu'un point de référence (B) du côté du véhicule suive approximativement la trajectoire de stationnement de consigne (E) et que l'angle de course réel (α) du véhicule (1) suive approximativement un angle de course de consigne déterminé initialement.

4. Véhicule automobile selon l'une quelconque des revendications précédentes,
**caractérisé en ce que**
la trajectoire de stationnement de consigne (E) peut être déterminée sans tenir compte du déplacement maximal des roues arrières ou en tenant compte seulement d'une plage angulaire partielle du déplacement maximal des roues arrières.

5. Véhicule automobile selon l'une quelconque des revendications précédentes,
**caractérisé en ce que**
il est prévu un dispositif d'affichage (11) sur lequel l'angle de direction de consigne peut être indiqué au conducteur.

6. Véhicule automobile selon la revendication 5 et l'une quelconque des revendications 2 ou 3,
**caractérisé en ce que**
l'on peut déterminer, à l'aide de l'écart déterminable du point de référence (B) par rapport à la trajectoire de stationnement de consigne (E) et/ou de l'écart de l'angle de course réel (α) par rapport à l'angle de course de consigne, un angle de direction de consigne de correction et celui-ci ou bien l'angle de direction de consigne corrigé de l'angle de direction de consigne de correction peut être indiqué sur le dispositif d'affichage (11).

7. Véhicule automobile selon l'une quelconque des revendications précédentes,
**caractérisé en ce que**
le conducteur peut voir, par le biais d'un dispositif d'affichage (11), l'écart de préférence actualisé en continu entre l'angle de direction réel et l'angle de direction de consigne.

8. Véhicule automobile selon l'une quelconque des revendications précédentes,
**caractérisé en ce que**
le conducteur peut voir, par le biais d'un dispositif d'affichage (11), l'écart maximal corrigible instantané de préférence actualisé en continu de l'angle de direction réel par rapport à l'angle de direction de consigne.

9. Véhicule automobile selon l'une quelconque des revendications précédentes,
**caractérisé en ce que**
le conducteur peut recevoir une information d'avertissement lorsqu'un écart de l'angle de direction réel par rapport à l'angle de direction de consigne ne peut plus être corrigé.

10. Véhicule automobile selon l'une quelconque des revendications précédentes,
**caractérisé en ce que**
les roues arrières (4) peuvent être déplacées d'un angle allant jusqu'à ± 10° autour de la position zéro des roues arrières.
